# EUROPEAN PATENT APPLICATION

(11) **EP 2 719 986 A2**
(43) Date of publication of application: **16.04.2014**
(21) Application number: 13187707.8
(22) Date of filing: 08.10.2013
(51) Int. Cl.: F28F 13/00, F28D 20/00

(54) **Pipe member equipped with heat insulation core pipeline, auxiliary heat conduction structure and u-shaped annularly-distributed pipeline**

(30) Priority: 09.10.2012 US 201213647588
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention relates to a U-type pipeline capable of transferring thermal energy with each other in a radiate arrangement, wherein the piping segments of the U-type fluid piping inlet end and/or outlet end of the U-type piping capable of thermal energy transmission with each other in the radiate arrangement are directly made of thermal insulating materials, or a thermal insulating structure is installed between the inlet end and the outlet end; and the exterior of the thermal insulating device (400) is further installed with an auxiliary thermal conductive structure (110) made of thermal conductive material, thereby preventing the thermal insulating device (400) from generating thermal resistance in the columnar thermal conductive body (300).

## Description

### BACKGROUND OF THE INVENTION

### (a) Field of the Invention

The present invention relates to a pipe member equipped with heat insulation core pipeline, auxiliary heat conduction structure and U-shaped annularly-distributed pipeline for being installed within the thermal storage body (500) composed of natural thermal storage body, such as shallow surface of the earth, or pool, lake, river, ocean, or artificial objects in solid, or gaseous, or liquid state; wherein the pipe member equipped with heat insulation core pipeline, auxiliary heat conduction structure and U-shaped annularly-distributed pipeline is constructed through that the piping segments of fluid inlet terminal and/or outlet terminal of the U-type core piping and loop piping are directly made of thermal insulating material, or thermal insulating structure is installed between the inlet terminal and the outlet terminal; so as to prevent thermal energy loss because of thermal conduction between adjacent piping segments of inlet terminal and outlet terminal on the same side when thermal conductive fluid with temperature difference passing through, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300).

### (b) Description of the Prior Art

Traditionally, thermal energy loss often occurs in U-type piping device of U-type piping heat exchanger, because of thermal conduction by temperature difference between adjacent piping segments of fluid inlet terminal and fluid outlet terminal installed on the same side when fluid with temperature difference passing through.

### SUMMARY OF THE INVENTION

The present invention relates to a U-type pipeline capable of thermal energy transmission with each other in a radiate arrangement, wherein the piping segments of the U-type fluid piping inlet end and/or outlet end of the U-type piping capable of thermal energy transmission with each other in the radiate arrangement are directly made of thermal insulating materials, or a thermal insulating structure is installed between the inlet end and the outlet end; and the above piping system is installed within the thermal conductive body made of thermal conductive material, so as to prevent thermal energy loss because of thermal conduction by temperature difference between adjacent piping segments with temperature difference of the inlet end and the outlet end installed on the same side when fluid with temperature difference passing through, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300).

According to another aspect of the present invention, a U-type pipeline for heat exchange with a thermal body comprises a first fluid inlet and outlet terminal 101; a second fluid inlet and outlet terminal 102; and a thermal insulating device 400 disposed around a part of the length of the pipeline in the region of the first fluid inlet and outlet terminal 101, and having an auxiliary thermal conductive structure 110 disposed around the exterior of the thermal insulating device 400.

### BRIEF DESCRIPTION OF THE DRAWINGS

FIG. 1 shows an embodiment of conventional U-type piping (100) installed within the thermal storage body (500).
FIG. 2 shows an embodiment of conventional U-type piping (100) installed within the columnar thermal conductive body (300), wherein the columnar thermal conductive body (300) is placed within the thermal storage body (500).
FIG. 3 is a schematic structural view illustrating the exterior of the thermal insulating device (400) of the thermal insulating piping segment of the U-type piping (100) is installed with an auxiliary thermal conductive structure (110) made of thermal conductive material, according to the present invention.
FIG. 4 is a cross sectional view of FIG. 3.
FIG. 5 is a schematic structural view illustrating the exterior of the thermal insulating device (400) of the thermal insulating piping segment of the U-type piping (100) is installed with an auxiliary thermal conductive structure (110) made of thermal conductive material and the exterior is enveloped by the columnar thermal conductive body.
FIG. 6 is a cross sectional view of FIG. 5.
FIG. 7 is a structural schematic view showing that two or more radiate arranged U-type piping sections are installed within thermal conductive cylinder, and the thermal insulating structure is installed at where close to the peripheral of piping group with same flow direction which concentrates toward axial center, and the exterior of the thermal insulating device (400) is installed with the auxiliary thermal conductive structure (110), according to the present invention.
FIG. 8 is a section view of FIG. 7.
FIG. 9 is a structural schematic view of an embodiment showing that the bottom side of the multiple sets of U-type piping jointly connects to the bottom of the common piping (200), which is constituted by larger diameter piping and installed at the axial center of the columnar thermal conductive body (300), and the common piping (200) has the shared first fluid inlet and outlet terminal (1101), and the exterior of the thermal insulating device (400) is installed with the auxiliary thermal conductive structure (110), according to the present invention.
FIG. 10 is a section view of FIG. 9.
FIG. 11 is a schematic view of an embodiment, showing that the piping segments of the U-type wavy piping structure (600) arranged along the columnar periphery are arranged in a waved shape near the edge of the axial periphery of the columnar thermal conductive body (300), and the exterior of the thermal insulating device (400) is installed with the auxiliary thermal conductive structure (110), according to the present invention.
FIG. 12 is a section view of FIG. 11.

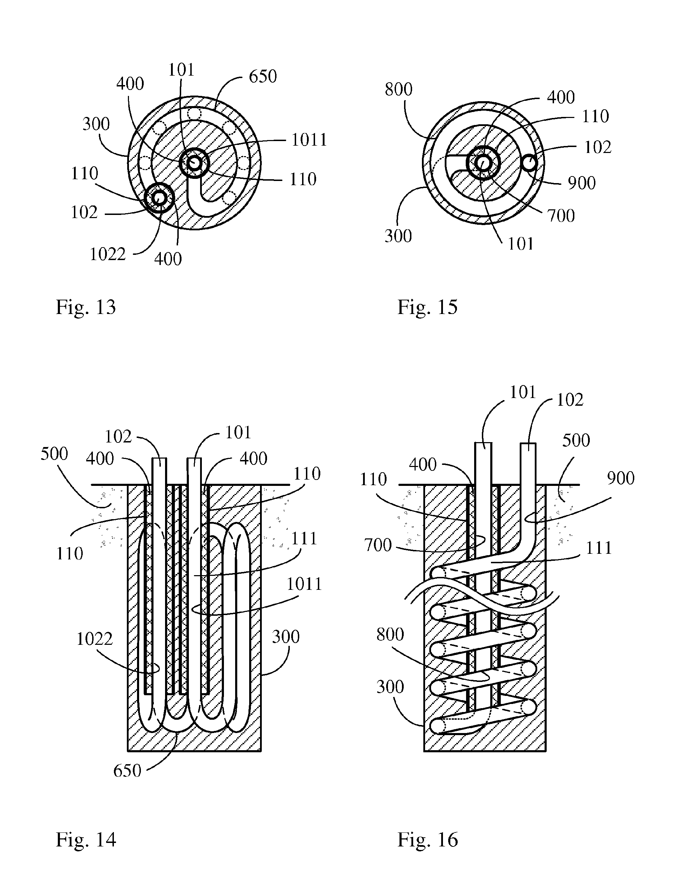

FIG. 13 is a schematic view of an embodiment in the U-type wavy piping structure having central piping segment (650), in which the piping segment (1011) of the first fluid inlet and outlet terminal (101) in the U-type wavy piping structure having central piping segment (650) is installed near the axial center of the columnar thermal conductive body (300), and the piping segment (1022) of the second fluid inlet and outlet terminal (102) is installed near the periphery of the columnar thermal conductive body (300), and the U-type wavy piping structure having central piping segment (650) between the two piping segments is arranged in a waved shape near the edge of the axial periphery of the columnar thermal conductive body (300) along the axial direction, and the exterior of the thermal insulating device (400) is installed with the auxiliary thermal conductive structure (110), according to the present invention.
FIG. 14 is a section view of FIG. 13.
FIG. 15 is a schematic view of an embodiment, showing that the spiral piping segment between the first fluid inlet and outlet terminal (101) and the second fluid inlet and outlet terminal (102) in the U-type spiral piping is spirally arranged near the edge of the axial periphery of the columnar thermal conductive body (300), and the exterior of the thermal insulating device (400) is installed with the auxiliary thermal conductive structure (110), according to the present invention.
FIG. 16 is a section view of FIG. 15.

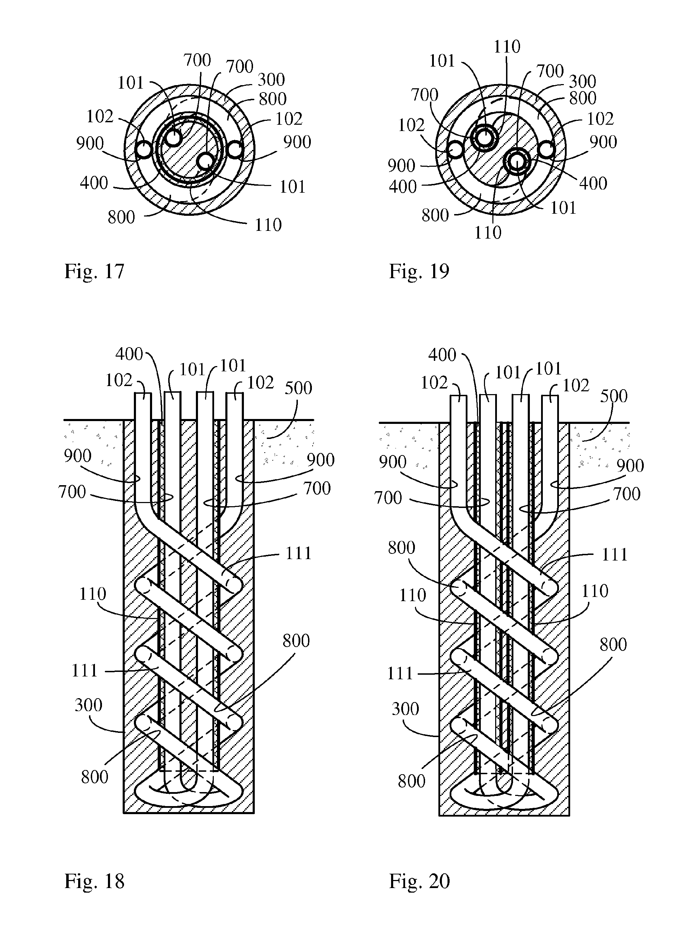

FIG. 17 is a schematic structural view showing that the multiple-route U-type spiral piping structure (800) having two or more than two routes is installed within the columnar thermal conductive body (300), and spirally installed at the periphery of the columnar thermal conductive body (300), and the bottom is concentrated toward the center and connected to the first fluid inlet and outlet terminal (101) through the central piping segment of U-type spiral piping (700), and the outer periphery of the central piping segment of U-type spiral piping (700) of the multiple routes concentrated at the center is installed with the thermal insulating device (400), and the exterior of the thermal insulating device (400) is installed with the auxiliary thermal conductive structure (110), according to the present invention.
FIG. 18 is a section view of FIG. 17.
FIG. 19 is a schematic structural view showing that the U-type spiral piping structure (800) having two or more than two routes is installed in the columnar thermal conductive body (300), and spirally arranged at the periphery of the columnar thermal conductive body (300), and the periphery of individual central piping segment of U-type spiral piping (700) of the multiple routes arranged at the center is installed with the thermal insulating device (400), and the exterior of the thermal insulating device (400) is installed with the auxiliary thermal conductive structure (110), according the present invention.
FIG. 20 is a section view of FIG. 19.

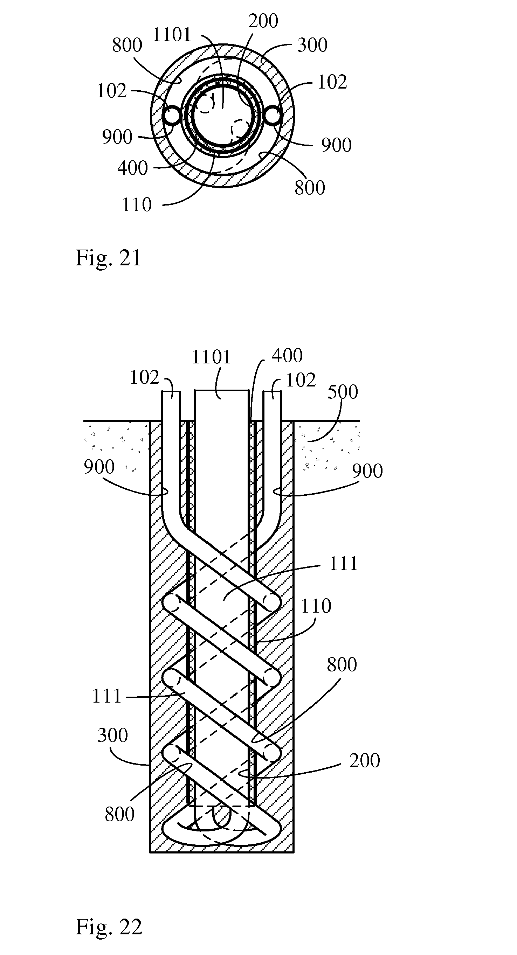

FIG. 21 is a schematic structural view showing that the U-type spiral piping structure (800) having two or more than two routes is installed in the columnar thermal conductive body (300) for being installed nearby the peripheral edge of the columnar thermal conductive body (300), the center of the columnar thermal conductive body (300) is installed with the common piping (200) with a larger diameter, the bottom of the multiple-route U-type spiral piping structure (800) is communicated with the bottom of the common piping (200), and the thermal insulating structure is installed at the outer periphery of the common piping (200), and the exterior of the thermal insulating device (400) is installed with the auxiliary thermal conductive structure (110), according to the present invention.
FIG. 22 is a section view of FIG. 21.

### DESCRIPTION OF MAIN COMPONENT SYMBOLS

100: U-type piping
101: First fluid inlet and outlet terminal
102: Second fluid inlet and outlet terminal
110: auxiliary thermal conductive structure
111: Thermal conductive fluid
200: Common piping
300: Columnar thermal conductive body
400: Thermal insulating device
500: Thermal storage body
600: U-type wavy piping structure
650: U-type wavy piping structure having central piping segment
700: Central piping segment of U-type spiral piping
800: U-type spiral piping structure
900: Piping segment of the second fluid inlet and outlet terminal (102) of the U-type spiral piping structure (800)
1101: Shared first fluid inlet and outlet terminal
1011: Piping segment of the first fluid inlet and outlet terminal (101)
1022: Piping segment of the second fluid inlet and outlet terminal (102)

### DETAILED DESCRIPTION OF THE PREFERRED EMBODIMENTS

The present invention relates to a pipe member equipped with heat insulation core pipeline, auxiliary heat conduction structure and U-shaped annularly-distributed pipeline for being installed within the thermal storage body (500) composed of natural thermal storage body, such as shallow surface of the earth, or pool, lake, river, ocean, or artificial objects in solid, or gaseous, or liquid state; wherein the pipe member equipped with heat insulation core pipeline, auxiliary heat conduction structure and U-shaped annularly-distributed pipeline is constructed through that the piping segments of fluid inlet terminal and/or outlet terminal of the U-type core piping and loop piping are directly made of thermal insulating material, or thermal insulating structure is installed between the inlet terminal and the outlet terminal; so as to prevent thermal energy loss because of thermal conduction between adjacent piping segments of inlet terminal and outlet terminal on the same side when thermal conductive fluid with temperature difference passing through, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300).

As for the pipe member equipped with heat insulation core pipeline, auxiliary heat conduction structure and U-shaped annularly-distributed pipeline of the present invention, each of the U-type piping (100) is used for passing through one or more following thermal conductive fluid (111), including for passing through:
1) liquid state fluid;
2) gaseous state fluid;
3) liquid to gaseous state fluid; and
4) gaseous to liquid state fluid.

Traditionally, thermal energy loss often occurs in U-type piping device of U-type piping heat exchanger, because of thermal conduction by temperature difference between adjacent piping segments of fluid inlet terminal and fluid outlet terminal installed on the same side when fluid with temperature difference passing through, which is illustrated by examples as followings:

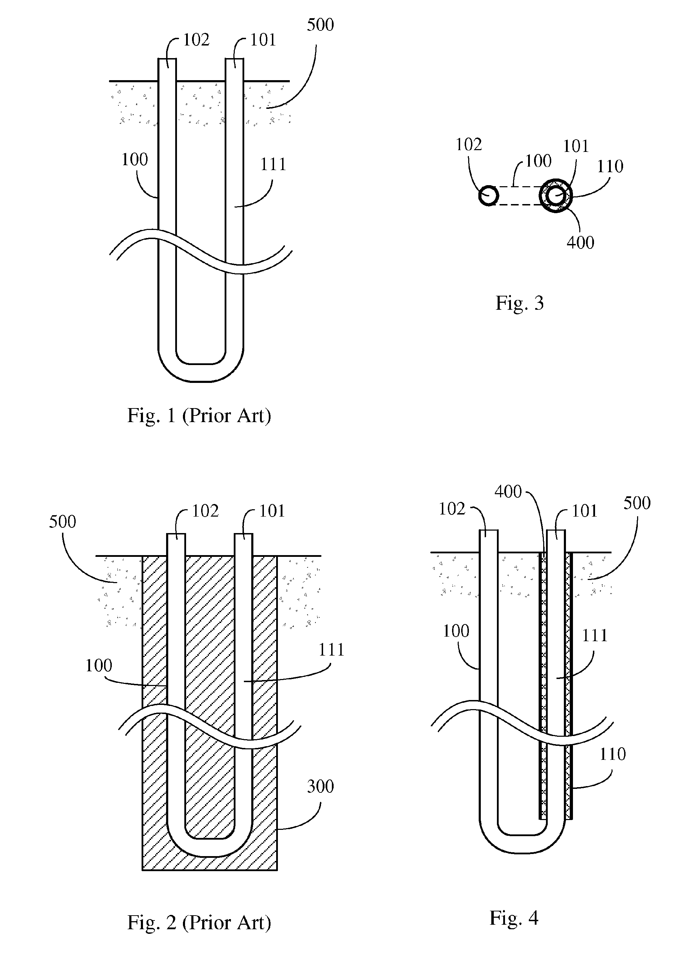

FIG. 1 shows an embodiment of conventional U-type piping (100) installed within the thermal storage body (500); when the thermal conductive fluid (111) passing through the piping segment of the first fluid inlet and outlet terminal (101) and the adjacent piping segment of the second fluid inlet and outlet terminal (102) respectively installed on the same side of the U-type piping (100) are in temperature difference, the two piping segments will produce thermal conduction and therefore result in thermal energy loss.

FIG. 2 shows an embodiment of conventional U-type piping (100) installed within the columnar thermal conductive body (300), wherein the columnar thermal conductive body (300) is placed within the thermal storage body (500).

When the columnar thermal conductive body (300) is installed at the pipe member equipped with heat insulation core pipeline, auxiliary heat conduction structure and U-shaped annularly-distributed pipeline of the thermal storage body (500) composed of natural thermal storage body, such as shallow surface of the earth, or pool, lake, river, ocean, etc, or artificial objects in solid, or gaseous, or liquid state, and the thermal conductive fluid (111) with temperature difference passes through the first fluid inlet and outlet terminal (101) and the second fluid inlet and outlet terminal (102) of the U-type piping, there will be thermal energy loss, because of thermal conduction between adjacent piping segments of the first fluid inlet and outlet terminal (101) and the second fluid inlet and outlet terminal (102) installed on the same side;

The present invention relates to a pipe member equipped with heat insulation core pipeline, auxiliary heat conduction structure and U-shaped annularly-distributed pipeline for being installed within the thermal storage body (500) composed of natural thermal storage body, such as shallow surface of the earth, or pool, lake, river, ocean, etc, or artificial objects in solid, or gaseous, or liquid state; wherein the pipe member equipped with heat insulation core pipeline, auxiliary heat conduction structure and U-shaped annularly-distributed pipeline is constructed through that the piping segments of the U-type fluid piping inlet terminal and/or outlet terminal, which are radial U-type pipelines for passing thermal energy through each other, are directly made of thermal insulating material, or thermal insulating structure is installed between the inlet terminal and the outlet terminal; so as to prevent thermal energy loss because of thermal conduction between adjacent piping segments of inlet terminal and outlet terminal on the same side when thermal conductive fluid with temperature difference passing through.

FIG. 3 is a schematic structural view illustrating the exterior of the thermal insulating device (400) of the thermal insulating piping segment of the U-type piping (100) is installed with an auxiliary thermal conductive structure (110) made of thermal conductive material, according to the present invention.

FIG. 4 is a cross sectional view of FIG. 3.

As shown in FIG. 3 and FIG. 4, it mainly consists of:
-- U-type piping (100): made of U-type tubular body for the thermal conductive fluid (111) passing through, wherein the U-type piping (100) is composed of a piping structure and installed in the thermal storage body (500); the U-type piping (100) has the first fluid inlet and outlet terminal (101) and the second fluid inlet and outlet terminal (102), the piping segment (111) close to the first fluid inlet and outlet terminal (101) is installed the thermal insulating device (400);
-- Thermal insulating device (400): related to a thermal insulating structure constituted by the followings with thermal insulating effects, such as solid, flexible body, or foam, or enveloped colloid, gas, or liquid, or vacuum structure, for being provided to envelope the piping segment (111) of the first fluid inlet and outlet terminal (101) of the U-type piping (100), or the piping segment (111) of the first fluid inlet and outlet terminal (101) is directly composed of thermal insulating material or sleeved with thermal insulating material;
-- Auxiliary thermal conductive structure (110): composed of thermal conductive material and installed at the exterior of the thermal insulating device (400);

The structure includes one or more than one of the following structural states:
1) Piping structure assembly: the periphery of the piping segment (111) of the first fluid inlet and outlet terminal (101) of the U-type piping (100) arranged for having a radial cross section is installed with the thermal insulating device (400), and the exterior of the thermal insulating device (400) is further installed with the auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure utilizing columnar thermal conductive body (300) having piping therein as the structure member: directly made of the columnar thermal conductive body (300), and formed in the structural state having piping therein, and having the piping segment (111) installed at the first fluid inlet and outlet terminal (101) of the U-type piping (100), the thermal insulating device (400) is installed between the piping segment (111) and the thermal conductive body structure, and the exterior of the thermal insulating device (400) is further installed with the auxiliary thermal conductive structure (110) made of thermal conductive material for preventing the thermal insulating device (400) from generating thermal resistance in the columnar thermal conductive body (300), so as to configure the columnar structure utilizing columnar thermal conductive body (300) having piping therein as the structure member.

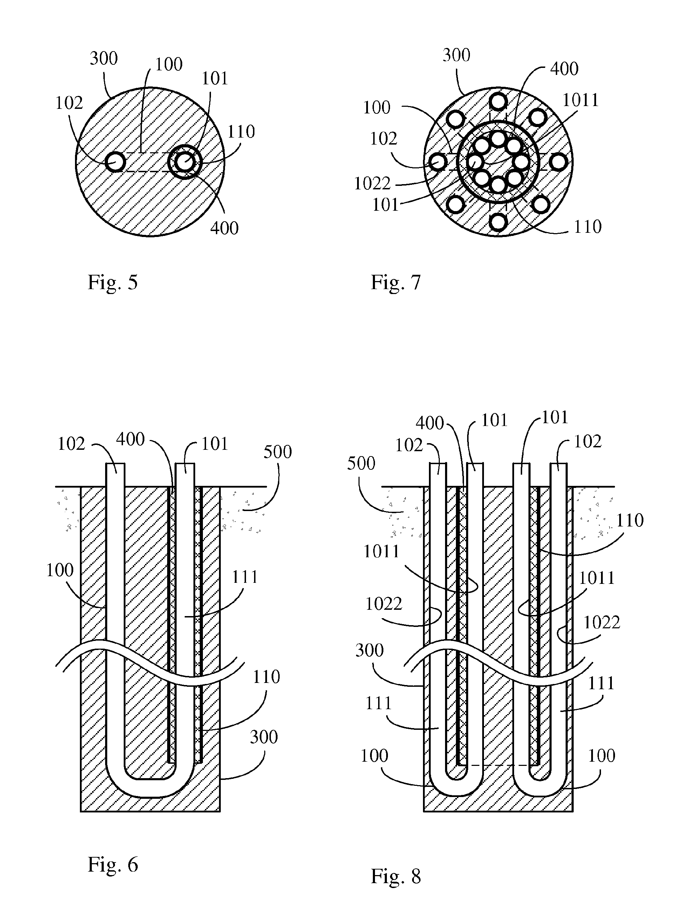

FIG. 5 is a schematic structural view illustrating the exterior of the thermal insulating device (400) of the thermal insulating piping segment of the U-type piping (100) is installed with an auxiliary thermal conductive structure (110) made of thermal conductive material and the exterior is enveloped by the columnar thermal conductive body.

FIG. 6 is a cross sectional view of FIG. 5.

As shown in FIG. 5 and FIG. 6, it mainly consists of:
-- U-type piping (100): made of U-type tubular body for the thermal conductive fluid (111) passing through, wherein the U-type piping (100) is composed of a piping structure and installed in the columnar thermal conductive body (300) composed of solid state or colloidal object; the U-type piping (100) has the first fluid inlet and outlet terminal (101) and the second fluid inlet and outlet terminal (102), and the piping segment (111) close to the first fluid inlet and outlet terminal (101) is installed the thermal insulating device (400);
-- Thermal insulating device (400): related to a thermal insulating structure constituted by the followings with thermal insulating effects, such as solid, flexible body, or foam, or enveloped colloid, gas, or liquid, or vacuum structure, for being provided to envelope the piping segment (111) of the first fluid inlet and outlet terminal (101) of the U-type piping (100), or the piping segment (111) of the first fluid inlet and outlet terminal (101) is directly composed of thermal insulating material or sleeved with thermal insulating material;
-- Auxiliary thermal conductive structure (110): composed of thermal conductive material and installed at the exterior of the thermal insulating device (400);

The structure includes one or more than one of the following structural states:
1) Piping structure assembly: the periphery of the piping segment (111) of the first fluid inlet and outlet terminal (101) of the U-type piping (100) arranged for having a radial cross section is installed with the thermal insulating device (400), and the exterior of the thermal insulating device (400) is further installed with the auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by columnar thermal conductive body (300): being provided with the columnar thermal conductive body (300) made of thermal conductive material and having various geometric cross section shapes such as round, oval, square, rectangular, or star-like shapes, being served to envelope the U-type piping (100), the periphery of the piping segment (111) of the first fluid inlet and outlet terminal (101) is installed with the thermal insulating device (400), and the exterior of the thermal insulating device (400) further is installed with the auxiliary thermal conductive structure (110) made of thermal conductive structure, thereby preventing the thermal insulating device (400) from generating thermal resistance in the columnar thermal conductive body (300), so as to configure the columnar structure enveloped by columnar thermal conductive body (300);
3) Columnar structure utilizing columnar thermal conductive body (300) having piping therein as the structure member: directly made of the columnar thermal conductive body (300), and formed in the structural state having piping therein, and having the piping segment (111) installed at the first fluid inlet and outlet terminal (101) of the U-type piping (100), the thermal insulating device (400) is installed between the piping segment (111) and the thermal conductive body structure, and the exterior of the thermal insulating device (400) is further installed with the auxiliary thermal conductive structure (110) made of thermal conductive material for preventing the thermal insulating device (400) from generating thermal resistance in the columnar thermal conductive body (300), so as to configure the columnar structure utilizing columnar thermal conductive body (300) having piping therein as the structure member.

FIG. 7 is a structural schematic view showing that two or more radiate arranged U-type piping sections are installed within thermal conductive cylinder, and the thermal insulating structure is installed at where close to the peripheral of piping group with same flow direction which concentrates toward axial center, and the exterior of the thermal insulating device (400) is installed with the auxiliary thermal conductive structure (110), according to the present invention.

FIG. 8 is a section view of FIG. 7.

As shown in FIG. 7 and FIG. 8, the main components are as followings:
-- U-type piping (100): made of U-type tubular body for the thermal conductive fluid (111) passing through, wherein the U-type piping (100) is composed of a piping structure or used for being installed within the columnar thermal conductive body (300) composed of solid state or colloidal object; each of the U-type piping (100) has the first fluid inlet and outlet terminal (101) and the second fluid inlet and outlet terminal (102), the piping segments (1011) of the first fluid inlet and outlet terminal (101) are adjacently installed at the axial center of the columnar thermal conductive body (300) and sleeved with the thermal insulating device (400), and the piping segments (1022) of the second fluid inlet and outlet terminal (102) are radiate arranged along the axial direction and near the edge of the columnar thermal conductive body (300);
-- Thermal insulating device (400): related to thermal insulating structure constituted by the followings with thermal insulating effects, such as solid, flexible body, or foam, or enveloped colloid, gas, or liquid, or vacuum structure, for being provided to envelope the piping segments (1011) of the first fluid inlet and outlet terminal (101) of plural U-type piping (100), which are concentrated adjacent installed at the axial center of the columnar thermal conductive body (300), or the piping segments (1011) of the first fluid inlet and outlet terminal (101) are directly made of thermal insulating material or enveloped by thermal insulating material; by way of the above thermal insulating structure, the thermal energy loss caused by thermal conduction between the piping segments (1011) of the first fluid inlet and outlet terminal (101) and the piping segments (1022) of the second fluid inlet and outlet terminal (102) on the same side of the U-type piping (100) is substantially reduced;
-- Auxiliary thermal conductive structure (110): composed of thermal conductive material and installed at the exterior of the thermal insulating device (400);

The structure includes one or more than one of the following structural states:
1) Piping structure assembly: which is provided with two or more than two U-type piping in radiate arrangement, and the piping segments (1011) of the first fluid inlet and outlet terminals (101) of each U-type piping (100) are adjacently installed at the center of the piping structure assembly, and the thermal insulating device (400) is installed between the periphery of the piping segments (1011) of the first fluid inlet and outlet terminals (101) of each U-type piping, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the U-type piping (100), and piping segments (1011) of plural first fluid inlet and outlet terminals (101) concentrated adjacent installed at the center of the piping structure, and the thermal insulating device (400) installed the periphery thereof, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and is configured in the structural state having piping therein for being provided with the piping segments (1011) of the first fluid inlet and outlet terminals (101) of each U-type piping concentrated adjacent installed at the center of the piping structure, and the bottom of the piping segments (1011) of the first fluid inlet and outlet terminals (101) are radiate connected to the piping segments (1022) of the second fluid inlet and outlet terminals (102) arranged nearby the periphery of the piping structure, and the thermal insulating device (400) is installed between the piping segments (1011) of the first fluid inlet and outlet terminals (101) of each U-type piping adjacently installed at the center of the piping structure and the thermal conductive body structure, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

As for the pipe member equipped with heat insulation core pipeline, auxiliary heat conduction structure and U-shaped annularly-distributed pipeline of the present invention, it further can have multiple sets of U-type piping jointly connected to the common piping (200) constituted by larger diameter piping installed at the axial center of the columnar thermal conductive body (300), the common piping (200) has a shared first fluid inlet and outlet terminal (1101), and is installed with the second fluid inlet and outlet terminal (102) in radiate arrangement along the axial direction of the columnar thermal conductive body (300).

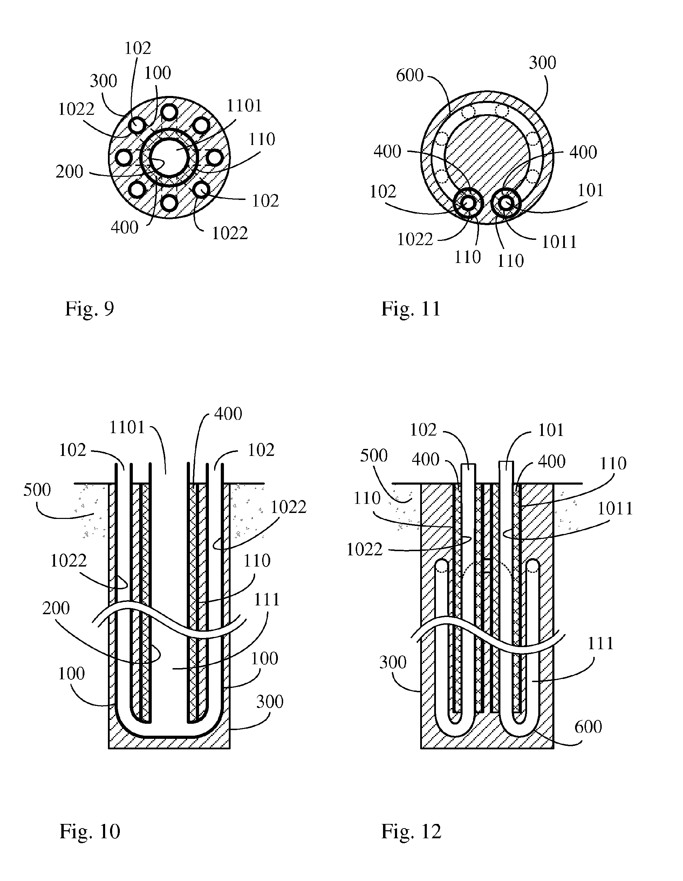

FIG. 9 is a structural schematic view of an embodiment showing that the bottom side of the multiple sets of U-type piping jointly connects to the bottom of the common piping (200), which is constituted by larger diameter piping and installed at the axial center of the columnar thermal conductive body (300), and the common piping (200) has the shared first fluid inlet and outlet terminal (1101), and the exterior of the thermal insulating device (400) is installed with the auxiliary thermal conductive structure (110), according to the present invention.

FIG. 10 is a section view of FIG. 9.

As shown in FIG. 9 and FIG. 10, it is mainly constituted by two or more than two U-type piping (100), the bottom side thereof are connected to the common piping (200) for the thermal conductive fluid (111) passing through, wherein each of the U-type piping (100) is composed of a piping structure or used for being installed in the columnar thermal conductive body (300) composed of solid state or colloidal object; the bottom side of each of the U-type piping (100) is jointly connected to the bottom of the common piping (200) which is constituted by larger diameter piping and installed at the axial center of the columnar thermal conductive body (300), and the top of the common piping (200) has a shared first fluid inlet and outlet terminal (1101), and the piping segments (1022) connecting to the second fluid inlet and outlet terminals (102) of each route of the U-type piping (100) are radiate arranged along the axial direction of the columnar thermal conductive body (300); said common piping (200) is installed at the axial center of the columnar thermal conductive body (300), and is further installed with the thermal insulating device (400) between the common piping (200) and the piping segments (1022) connecting to the second fluid inlet and outlet terminals (102) of each route of the U-type piping (100), and the piping segments (1022) connecting to the second fluid inlet and outlet terminals (102) of each route of the U-type piping (100) are respectively arranged near the edge of the axial periphery of the columnar thermal conductive body (300); and
-- Thermal insulating device (400): related to thermal insulating structure constituted by the followings with thermal insulating effects, such as solid, flexible body, or foam, or enveloped colloid, gas, or liquid, or vacuum structure, for being installed between the piping segments (1022) connecting to the second fluid inlet and outlet terminals (102) of the U-type piping (100) and the common piping (200), or the common piping (200) is directly made of thermal insulating material or enveloped by thermal insulating material; by way of the above thermal insulating structure, thermal energy loss caused by thermal conduction between the piping segments of the common piping (200) and the second fluid inlet and outlet terminal (102) is reduced;
-- Auxiliary thermal conductive structure (110): composed of thermal conductive material and installed at the exterior of the thermal insulating device (400);

The structure includes one or more than one of the following structural states:
1) Piping structure assembly: which is provided with multiple sets of U-type piping (100) and the common piping (200) installed at the center of the piping structure assembly for connecting to the shared first fluid inlet and outlet terminal (1101), wherein the piping segments (1022) of the second fluid inlet and outlet terminals (102) are respectively arranged at the axial periphery of the piping structure assembly, and the bottom thereof is radiate distributed and connected to the bottom of the common piping (200), and the thermal insulating device (400) is installed between the piping segments (1022) of the second fluid inlet and outlet terminals (102) and the periphery of the common piping (200), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the common piping (200) having the shared first fluid inlet and outlet terminal (1101), and to envelope the piping segments (1022) connecting to the second fluid inlet and outlet terminals (102), and the bottom of the common piping (200) is communicated with the bottom of the piping segments (1022) of the second fluid inlet and outlet terminals (102), and the thermal insulating device (400) is installed at the periphery of the common piping (200), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the common piping (200) for connecting to the shared first fluid inlet and outlet terminal (1101), and installed with the thermal insulating device (400), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

FIG. 11 is a schematic view of an embodiment, showing that the piping segments of the U-type wavy piping structure (600) arranged along the columnar periphery are arranged in a waved shape near the edge of the axial periphery of the columnar thermal conductive body (300), and the exterior of the thermal insulating device (400) is installed with the auxiliary thermal conductive structure (110), according to the present invention.

FIG. 12 is a section view of FIG. 11.

As shown in FIG. 11 and FIG. 12, the main components are as followings:
-- U-type wavy piping structure (600): made of U-type wavy pipe body for the thermal conductive fluid (111) passing through, wherein the U-type wavy piping structure (600) is composed of a wave piping structure or used for being installed within the columnar thermal conductive body (300) composed of solid state or colloidal object; the U-type wavy piping structure (600) is placed in a waved shape around the periphery of the columnar thermal conductive body (300) and upper and lower wavy bended along the axial direction, and the both ends of the U-type wavy piping structure (600) have the piping segment (1011) of the first fluid inlet and outlet terminal (101) and the piping segment (1022) the second fluid inlet and outlet terminal (102) which are interlinked;
-- Thermal insulating device (400): related to thermal insulating structure constituted by the followings with thermal insulating effects, such as solid, flexible body, or foam, or enveloped colloid, gas, or liquid, or vacuum structure, for being provided to envelope the periphery of both or one of the piping segment (1011) for connecting to the first fluid inlet and outlet terminal (101) and the piping segments (1022) for connecting to the second fluid inlet and outlet terminal (102) of U-type wavy piping structure (600) is installed at the periphery of the columnar thermal conductive body (300), or both or one of the two piping segments are directly made of thermal insulating material or enveloped by thermal insulating material; by way of the above thermal insulating structure, the thermal energy loss caused by thermal conduction between the piping segment (1011) of the first fluid inlet and outlet terminal (101) and the piping segment (1022) of the second fluid inlet and outlet terminal (102) installed nearby on the U-type wavy piping structure (600) is substantially reduced;
-- Auxiliary thermal conductive structure (110): composed of thermal conductive material and installed at the exterior of the thermal insulating device (400);

The structure includes one or more than one of the following structural states:
1) Piping structure assembly: which is provided with the U-type wavy piping structure (600) arranged at the columnar periphery along the piping structure assembly, and the piping segment (1011) of the first fluid inlet and outlet terminal (101) and the piping segment (1022) of the second fluid inlet and outlet terminal (102) installed at two ends of the U-type wavy piping structure (600), and the thermal insulating device (400) installed on both or one of the two piping segments, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the U-type wavy piping structure (600) arranged around the columnar periphery, and to envelope the piping segment (1011) of the first fluid inlet and outlet terminal (101) and the piping segment (1022) of the second fluid inlet and outlet terminal (102) installed at two ends of the U-type wavy piping structure (600), as well as to envelope the thermal insulating device (400) installed on the two or at least one of the two piping segments, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the U-type wavy piping structure (600) arranged around the columnar thermal conductive body, including the piping segment (1011) of the first fluid inlet and outlet terminal (101) and the piping segment (1022) of the second fluid inlet and outlet terminal (102) installed at two ends of the U-type wavy piping structure (600), and the thermal insulating device (400) installed between the piping segment (1011) of the first fluid inlet and outlet terminal (101) and the piping segment (1022) of the second fluid inlet and outlet terminal (102) and the thermal conductive body structure, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

FIG. 13 is a schematic view of an embodiment in the U-type wavy piping structure having central piping segment (650), in which the piping segment (1011) of the first fluid inlet and outlet terminal (101) in the U-type wavy piping structure having central piping segment (650) is installed near the axial center of the columnar thermal conductive body (300), and the piping segment (1022) of the second fluid inlet and outlet terminal (102) is installed near the periphery of the columnar thermal conductive body (300), and the U-type wavy piping structure having central piping segment (650) between the two piping segments is arranged in a waved shape near the edge of the axial periphery of the columnar thermal conductive body (300) along the axial direction, and the exterior of the thermal insulating device (400) is installed with the auxiliary thermal conductive structure (110), according to the present invention.

FIG. 14 is a section view of FIG. 13.

As shown in FIG. 13 and FIG. 14, the main components are as followings:
-- U-type wavy piping structure having central piping segment (650): made of U-type wavy pipe body for the thermal conductive fluid (111) passing through, wherein the U-type wavy piping structure having central piping segment (650) is composed of a wavy piping structure having central piping segment or used for being installed within the columnar thermal conductive body (300) composed of solid state or colloidal object; the U-type wavy piping structure having central piping segment (650) is placed in a waved shape around the periphery of the columnar thermal conductive body (300) and upper and lower wavy bended along the axial direction, and the both ends of the U-type wavy piping structure having central piping segment (650) have the piping segment (1011) of the first fluid inlet and outlet terminal (101) and the piping segment (1022) of the second fluid inlet and outlet terminal (102) which are interlinked, in which the piping segment (1011) of the first fluid inlet and outlet terminal (101) is placed near the center of the columnar thermal conductive body (300), the piping segment (1022) of the second fluid inlet and outlet terminal (102) is placed near periphery of the columnar thermal conductive body (300), and the U-type wavy piping structure having central piping segment (650) between the two piping segments is arranged in a waved shape near the edge of the periphery of the columnar thermal conductive body (300) along the axial direction;
-- Thermal insulating device (400): related to thermal insulating structure constituted by the followings with thermal insulating effects, such as solid, flexible body, or foam, or enveloped colloid, gas, or liquid, or vacuum structure, for being provided to envelope both or one of the periphery of the piping segment (1011) for connecting to the first fluid inlet and outlet terminal (101) and the piping segments (1022) for connecting to the second fluid inlet and outlet terminal (102) of U-type wavy piping structure having central piping segment (650) installed at the center and periphery of the columnar thermal conductive body (300), or both or one of the two piping segments are directly made of thermal insulating material or enveloped by thermal insulating material; by way of the above thermal insulating structure, thermal energy loss caused by thermal conduction between the piping segments (1011) of the first fluid inlet and outlet terminal (101) and the piping segments (1022) of the second fluid inlet and outlet terminal (102) installed nearby on the U-type wavy piping structure having central piping segment (650) is substantially reduced;
-- Auxiliary thermal conductive structure (110): composed of thermal conductive material and installed at the exterior of the thermal insulating device (400);

The structure includes one or more than one of the following structural states:
1) Piping structure assembly: which is provided with the U-type wavy piping structure having central piping segment (650) installed near the center and the columnar periphery, and the piping segment (1011) of the first fluid inlet and outlet terminal (101) and the piping segment (1022) of the second fluid inlet and outlet terminal (102) of the U-type wavy piping structure having central piping segment (650), and the thermal insulating device (400) installed on the two or at least one of the two piping segments, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the U-type wavy piping structure having central piping segment (650), and to envelope the piping segment (1011) of the first fluid inlet and outlet terminal (101) and the piping segment (1022) of the second fluid inlet and outlet terminal (102) installed at two ends of the U-type wavy piping structure having central piping segment (650), as well as to envelope the thermal insulating device (400) installed on the two or at least one of the two piping segments, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the U-type wavy piping structure having central piping segment (650) arranged along the columnar thermal conductive body, including the piping segment (1011) of the first fluid inlet and outlet terminal (101) and the piping segment (1022) of the second fluid inlet and outlet terminal (102) installed at two ends of the U-type wavy piping structure having central piping segment (650), and the thermal insulating device (400) installed between the thermal conductive body and both or one of the piping segment (1011) of the first fluid inlet and outlet terminal (101) and the piping segment (1022) of the second fluid inlet and outlet terminal (102), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

FIG. 15 is a schematic view of an embodiment, showing that the spiral piping segment between the first fluid inlet and outlet terminal (101) and the second fluid inlet and outlet terminal (102) in the U-type spiral piping is spirally arranged near the edge of the axial periphery of the columnar thermal conductive body (300), and the exterior of the thermal insulating device (400) is installed with the auxiliary thermal conductive structure (110), according to the present invention.

FIG. 16 is a section view of FIG. 15.

As shown in FIG. 15 and FIG. 16, the main components are as followings:
-- U-type spiral piping structure (800): made of U-type spiral pipe body for the thermal conductive fluid (111) passing through, wherein the U-type spiral piping structure (800) is composed of a U-type spiral piping structure or used for being installed within the columnar thermal conductive body (300) composed of solid state or colloidal object; the U-type spiral piping of the U-type spiral piping structure (800) is spirally placed near the edge of the periphery of the columnar thermal conductive body (300), in which the first fluid inlet and outlet terminal (101) is placed at the top end of the central piping segment of the U-type spiral piping (700), and directly leads to the bottom of the U-type spiral piping of the U-type spiral piping structure (800) via the central piping segment of U-type spiral piping (700), and the second fluid inlet and outlet terminal (102) is placed at the top end of the piping segment (900) of the second fluid inlet and outlet terminal (102) of the U-type spiral piping structure (800) spirally up its own run;
-- Thermal insulating device (400): related to a thermal insulating structure constituted by the followings with thermal insulating effects, such as solid, flexible body, or foam, or enveloped colloid, gas, or liquid, or vacuum structure, wherein the U-type spiral piping structure (800) is placed in the columnar thermal conductive body (300), and the center of the columnar thermal conductive body (300) is installed with the central piping segment of U-type spiral piping (700) for leading up to the first fluid inlet and outlet terminal (101), and the central piping segment of U-type spiral piping (700) is directly made of the thermal insulating material or enveloped by the thermal insulating material, or the thermal insulating device (400) is installed between the U-type spiral piping structure (800) around and near the edge of the columnar thermal conductive body (300) spirally up its own run leading to the second fluid inlet and outlet terminal (102) and the piping segment (900) of the second fluid inlet and outlet terminal (102) of the U-type spiral piping structure (800) and the central piping segment of U-type spiral piping (700); by way of the above thermal insulating device (400), the thermal energy loss caused by thermal conduction between the central piping segment of U-type spiral piping (700) leading up to the first fluid inlet and outlet terminal (101), and the U-type spiral piping structure (800) leading to the second fluid inlet and outlet terminal (102) and the central piping segment of U-type spiral piping (700) is substantially reduced;
-- Auxiliary thermal conductive structure (110): composed of thermal conductive material and installed at the exterior of the thermal insulating device (400);

The structure includes one or more than one of the following structural states:
1) Piping structure assembly: which is provided with the U-type spiral piping structure (800), the piping segment (900) of the second fluid inlet and outlet terminal (102) of the U-type spiral piping structure (800), the central piping segment of U-type spiral piping (700) for connecting to the first fluid inlet and outlet terminal (101), and the thermal insulating device (400) installed at the periphery of the central piping segment of U-type spiral piping (700), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the U-type spiral piping structure (800), and to envelope the piping segment (900) of the second fluid inlet and outlet terminal (102) of the U-type spiral piping structure (800) and the central piping segment of U-type spiral piping (700) for connecting to the first fluid inlet and outlet terminal (101), as well as to envelope the thermal insulating device (400) installed at the periphery of the central piping segment of U-type spiral piping (700) at the first fluid inlet and outlet terminal (101), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the U-type spiral piping structure (800), the piping segment (900) of the second fluid inlet and outlet terminal (102) of the U-type spiral piping structure (800), the central piping segment of U-type spiral piping (700) for connecting to the first fluid inlet and outlet terminal (101), and the thermal insulating device (400) installed at the periphery of the central piping segment of U-type spiral piping (700) at the first fluid inlet and outlet terminal (101), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing columnar thermal conductive body (300) having piping therein as the structure member.

FIG. 17 is a schematic structural view showing that the multiple-route U-type spiral piping structure (800) having two or more than two routes is installed within the columnar thermal conductive body (300), and spirally installed at the periphery of the columnar thermal conductive body (300), and the bottom is concentrated toward the center and connected to the first fluid inlet and outlet terminal (101) through the central piping segment of U-type spiral piping (700), and the outer periphery of the central piping segment of U-type spiral piping (700) of the multiple routes concentrated at the center is installed with the thermal insulating device (400), and the exterior of the thermal insulating device (400) is installed with the auxiliary thermal conductive structure (110), according to the present invention.

FIG. 18 is a section view of FIG. 17

As shown in FIG. 17 and FIG. 18, it mainly consists of:
-- Multiple-route U-type spiral piping: constituted by a U-type spiral piping structure (800) having two or more than two routes and allowing the thermal conductive fluid (111) to pass through, or by multiple sets of the U-type spiral piping structures (800) installed in the columnar thermal conductive body (300) composed of solid state or colloidal object; the U-type spiral piping structure (800) in multiple-route is spirally and annularly installed near the peripheral edge of the columnar thermal conductive body (300), wherein the first fluid inlet and outlet terminal (101) of the U-type spiral piping structure (800) of each route is installed at the top of the spiral piping structure center, and is communicated with the bottom of the U-type spiral piping structure (800) of each route through the central piping segment of U-type spiral piping (700) of each route, and the second inlet and outlet terminal (102) of each route is installed at the top end of the U-type spiral piping structure (800) spirally up its own run via the piping segment (900) of the second fluid inlet and outlet terminal (102) of the U-type spiral piping structure (800) of each route;
-- Thermal insulating device (400): related to a thermal insulating structure constituted by the followings with thermal insulating effects, such as solid, flexible body, or foam, or enveloped colloid, gas, or liquid, or vacuum structure; the U-type spiral piping structure (800) having two or more than two routes is installed in the columnar thermal conductive body (300), and the central piping segments of U-type spiral piping (700) of the multiple routes are concentrated in the columnar thermal conductive body (300) for upwardly connecting to the first fluid inlet and outlet terminal (101); the central piping segment of U-type spiral piping (700) is directly made of the thermal insulating material or sleeved with the thermal insulating material, or the periphery of the concentrated central piping segments of U-type spiral piping (700) of the multiple routes is installed with the thermal insulating structure (400), by way of the mentioned thermal insulating structure (400), the thermal energy loss caused by thermal conduction between the concentrated central piping segments of U-type spiral piping (700) of the multiple routes, and the U-type spiral piping structure (800) of each route, and the piping segment (900) of the second fluid inlet and outlet terminal (102) of the U-type spiral piping structure (800) of each route is substantially reduced;
-- Auxiliary thermal conductive structure (110): composed of thermal conductive material and installed at the exterior of the thermal insulating device (400);

The structure includes one or more than one of the following structural states:
1) Piping structure assembly: which is provided with the multiple-route U-type spiral piping composed of the U-type spiral piping structure (800) having two or more than two routes and the piping segment (900) of the second fluid inlet and outlet terminal (102) of the U-type spiral piping structure (800), and the central piping segment of U-type spiral piping (700) of each route is concentrated adjacent installed at the axial center, and the thermal insulating device (400) is installed at the periphery of the central piping segment of U-type spiral piping (700), or the central piping segment of U-type spiral piping (700) of each route is directly made of thermal insulating material, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of the thermal conductive material in various geometric cross section shapes such as round, oval, square, rectangular, or star-like shapes, for being served to envelope the U-type spiral piping structure (800) having two more or than two routes and the piping segment (900) of the second fluid inlet and outlet terminal (102) of the U-type spiral piping structure (800), and to envelope the thermal insulating device (400) installed at the periphery of the central piping segments of U-type spiral piping (700) concentrated adjacent installed at the axial center, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300) (as shown in FIG. 17 and FIG. 18); or the periphery of individual central piping segment of U-type spiral piping (700) of the multiple routes concentrated adjacent installed at the axial center is respectively installed with the thermal insulating device (400), or the individual central piping segment of U-type spiral piping (700) is directly made of the thermal insulating material, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300) (as shown in FIG. 19, which is a schematic structural view showing that the U-type spiral piping structure (800) having two or more than two routes is installed in the columnar thermal conductive body (300), and spirally arranged at the periphery of the columnar thermal conductive body (300), and the periphery of individual central piping segment of U-type spiral piping (700) of the multiple routes arranged at the center is installed with the thermal insulating device (400), and the exterior of the thermal insulating device (400) is installed with an auxiliary thermal conductive structure (110), according the present invention; and FIG. 20 is a section view of FIG. 19);
3) Columnar structure utilizing the columnar thermal conductive body (300) having piping therein as the structure member: which is directly made of the columnar thermal conductive body (300), and configured in the structural state having piping therein for being installed with the multiple-route spiral piping composed of the U-type spiral piping structure (800) having two or more than two routes, including the piping segment (900) of the second fluid inlet and outlet terminal (102) of the U-type spiral piping structure (800), the central piping segments of U-type spiral piping (700) of each route which connects to the first fluid inlet and outlet terminal (101) being concentrated adjacent installed at the axial center, and the thermal insulating device (400) installed at the periphery of the central piping segment of U-type spiral piping (700), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

FIG. 21 is a schematic structural view showing that the U-type spiral piping structure (800) having two or more than two routes is installed in the columnar thermal conductive body (300) for being installed nearby the peripheral edge of the columnar thermal conductive body (300), the center of the columnar thermal conductive body (300) is installed with the common piping (200) with a larger diameter, the bottom of the multiple-route U-type spiral piping structure (800) is communicated with the bottom of the common piping (200), and the thermal insulating structure is installed at the outer periphery of the common piping (200), and the exterior of the thermal insulating device (400) is installed with the auxiliary thermal conductive structure (110), according to the present invention.

FIG. 22 is a section view of FIG. 21.

As shown in FIG. 21 and FIG. 22, it mainly consists of:
-- Multiple-route U-type spiral piping: constituted by the U-type spiral piping structure (800) having two or more than two routes and allowing the thermal conductive fluid (111) to pass through, or by multiple sets of the U-type spiral piping structures (800) installed in the columnar thermal conductive body (300) composed of solid state or colloidal object; the U-type spiral piping structure (800) in multiple-route is spirally and annularly installed at the periphery of the columnar thermal conductive body (300), and each route has the piping segment (900) of the second fluid inlet and outlet terminal (102) of the U-type spiral piping structure (800) for connecting to the corresponding second fluid inlet and outlet terminal (102), and the bottom of the U-type spiral piping structure (800) of each route is communicated to the common piping (200), and the common piping (200) is installed at the center of the U-type spiral piping structure (800), and the top thereof is connected to the shared first fluid inlet and outlet terminal (1101);
-- Thermal insulating device (400): related to a thermal insulating structure constituted by the followings with thermal insulating effects, such as solid, flexible body, or foam, or enveloped colloid, gas, or liquid, or vacuum structure; the U-type spiral piping structure (800) of each route is installed in the columnar thermal conductive body (300), and the common piping (200) is installed at the axial center of the columnar thermal conductive body (300), and the top thereof is connected to the shared first fluid inlet and outlet terminal (1101), and the piping segment of the common piping (200) of the U-type spiral piping is directly made of the thermal insulating material or sleeved with the thermal insulating material, or the thermal insulating structure (400) is installed between the U-type spiral piping structure (800) of each route and the piping segment (900) of the second fluid inlet and outlet terminal (102) of the U-type spiral piping structure (800) of each route, and the piping segment of the common piping (200) of the U-type spiral piping, by way of the mentioned thermal insulating structure (400), the thermal energy loss caused by thermal conduction between the common piping (200), and the U-type spiral piping structure (800) and the piping segment (900) of the second fluid inlet and outlet terminal (102) of the U-type spiral piping structure (800) of each route is substantially reduced;
-- Auxiliary thermal conductive structure (110): composed of thermal conductive material and installed at the exterior of the thermal insulating device (400);

The structure includes one or more than one of the following structural states:
1) Piping structure assembly: which is provided with the multiple-route U-type spiral piping composed of the U-type spiral piping structure (800) having two or more than two routes and the piping segment (900) of the second fluid inlet and outlet terminal (102) of the U-type spiral piping structure (800), and the common piping (200) allowing the bottom of the U-type spiral piping structure (800) of each route to be communicated to, and the shared first fluid inlet and outlet terminal (1101) enabling the common piping (200) to upwardly connected to, and the thermal insulation device (400) installed on the common piping (200), or the common piping (200) directly made of thermal insulating material, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of the thermal conductive material in various geometric cross section shapes such as round, oval, square, rectangular, or star-like shapes, for being served to envelope the multiple-route U-type spiral piping composed of the U-type spiral piping structure (800) having two more or than two routes and the piping segment (900) of the second fluid inlet and outlet terminal (102) of the U-type spiral piping structure (800), and to envelope the common piping (200) having its bottom communicated with the bottom of the U-type spiral piping structure (800) of each route and having its top communicated with the shared first fluid inlet and outlet terminal (1101), and to envelope the thermal insulating device (400) installed on the common piping (200), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the multiple-route spiral piping structure (800) composed of the U-type spiral piping structure (800) having two or more than two routes and the piping segment (900) of the second fluid inlet and outlet terminal (102) of the U-type spiral piping structure (800), and the common piping (200) installed at the center of the U-type spiral piping structure (800) and communicated with the bottom of the U-type spiral piping structure (800) of each route, and the thermal insulating device (400) installed thereon, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

## Claims

1. A pipe member equipped with heat insulation core pipeline, auxiliary heat conduction structure and U-shaped annularly-distributed pipeline, which is installed within the thermal storage body (500) composed of natural thermal storage body, such as shallow surface of the earth, or pool, lake, river, ocean, or artificial objects in solid, or gaseous, or liquid state, and is constructed through that the piping segments of fluid inlet terminal and/or outlet terminal of the U-type core piping and loop piping are directly made of thermal insulating material, or thermal insulating structure is installed between the inlet terminal and the outlet terminal, so as to prevent thermal energy loss because of the thermal conduction between adjacent piping segments of inlet terminal and outlet terminal on the same side when thermal conductive fluid with temperature difference passing through, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300); and it mainly consists of:
-- U-type piping (100): made of U-type tubular body for the thermal conductive fluid (111) passing through, wherein the U-type piping (100) is composed of a piping structure and installed in the thermal storage body (500); the U-type piping (100) has the first fluid inlet and outlet terminal (101) and the second fluid inlet and outlet terminal (102), the piping segment (111) close to the first fluid inlet and outlet terminal (101) is installed the thermal insulating device (400);
-- Thermal insulating device (400): related to a thermal insulating structure constituted by the followings with thermal insulating effects, such as solid, flexible body, or foam, or enveloped colloid, gas, or liquid, or vacuum structure, for being provided to envelope the piping segment (111) of the first fluid inlet and outlet terminal (101) of the U-type piping (100), or the piping segment (111) of the first fluid inlet and outlet terminal (101) is directly composed of thermal insulating material or sleeved with thermal insulating material;
-- Auxiliary thermal conductive structure (110): composed of thermal conductive material and installed at the exterior of the thermal insulating device (400);
The structure includes one or more than one of the following structural states:
1) Piping structure assembly: the periphery of the piping segment (111) of the first fluid inlet and outlet terminal (101) of the U-type piping (100) arranged for having a radial cross section is installed with the thermal insulating device (400), and the exterior of the thermal insulating device (400) is further installed with the auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure utilizing columnar thermal conductive body (300) having piping therein as the structure member: directly made of the columnar thermal conductive body (300), and formed in the structural state having piping therein, and having the piping segment (111) installed at the first fluid inlet and outlet terminal (101) of the U-type piping (100), the thermal insulating device (400) is installed between the piping segment (111) and the thermal conductive body structure, and the exterior of the thermal insulating device (400) is further installed with the auxiliary thermal conductive structure (110) made of thermal conductive material for preventing the thermal insulating device (400) from generating thermal resistance in the columnar thermal conductive body (300), so as to configure the columnar structure utilizing columnar thermal conductive body (300) having piping therein as the structure member.

2. A pipe member equipped with heat insulation core pipeline, auxiliary heat conduction structure and U-shaped annularly-distributed pipeline as claimed in claim 1, the exterior of the thermal insulating device (400) of the thermal insulating piping segment of the U-type piping (100) is further installed with an auxiliary thermal conductive structure (110) made of thermal conductive material and the exterior is enveloped by the columnar thermal conductive body, and it mainly consists of:
-- U-type piping (100): made of U-type tubular body for the thermal conductive fluid (111) passing through, wherein the U-type piping (100) is composed of a piping structure and installed in the columnar thermal conductive body (300) composed of solid state or colloidal object; the U-type piping (100) has the first fluid inlet and outlet terminal (101) and the second fluid inlet and outlet terminal (102), and the piping segment (111) close to the first fluid inlet and outlet terminal (101) is installed the thermal insulating device (400);
-- Thermal insulating device (400): related to a thermal insulating structure constituted by the followings with thermal insulating effects, such as solid, flexible body, or foam, or enveloped colloid, gas, or liquid, or vacuum structure, for being provided to envelope the piping segment (111) of the first fluid inlet and outlet terminal (101) of the U-type piping (100), or the piping segment (111) of the first fluid inlet and outlet terminal (101) is directly composed of thermal insulating material or sleeved with thermal insulating material;
-- Auxiliary thermal conductive structure (110): composed of thermal conductive material and installed at the exterior of the thermal insulating device (400);
The structure includes one or more than one of the following structural states:
1) Piping structure assembly: the periphery of the piping segment (111) of the first fluid inlet and outlet terminal (101) of the U-type piping (100) arranged for having a radial cross section is installed with the thermal insulating device (400), and the exterior of the thermal insulating device (400) is further installed with the auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by columnar thermal conductive body (300): being provided with the columnar thermal conductive body (300) made of thermal conductive material and having various geometric cross section shapes such as round, oval, square, rectangular, or star-like shapes, being served to envelope the U-type piping (100), the periphery of the piping segment (111) of the first fluid inlet and outlet terminal (101) is installed with the thermal insulating device (400), and the exterior of the thermal insulating device (400) further is installed with the auxiliary thermal conductive structure (110) made of thermal conductive structure, thereby preventing the thermal insulating device (400) from generating thermal resistance in the columnar thermal conductive body (300), so as to configure the columnar structure enveloped by columnar thermal conductive body (300);
3) Columnar structure utilizing columnar thermal conductive body (300) having piping therein as the structure member: directly made of the columnar thermal conductive body (300), and formed in the structural state having piping therein, and having the piping segment (111) installed at the first fluid inlet and outlet terminal (101) of the U-type piping (100), the thermal insulating device (400) is installed between the piping segment (111) and the thermal conductive body structure, and the exterior of the thermal insulating device (400) is further installed with the auxiliary thermal conductive structure (110) made of thermal conductive material for preventing the thermal insulating device (400) from generating thermal resistance in the columnar thermal conductive body (300), so as to configure the columnar structure utilizing columnar thermal conductive body (300) having piping therein as the structure member.

3. A pipe member equipped with heat insulation core pipeline, auxiliary heat conduction structure and U-shaped annularly-distributed pipeline as claimed in claim 1, two or more radiate arranged U-type piping sections are further installed within thermal conductive cylinder, and the thermal insulating structure is installed at where close to the peripheral of piping group with same flow direction which concentrates toward axial center, and the exterior of the thermal insulating device (400) is installed with the auxiliary thermal conductive structure (110), and the main components are as followings:
-- U-type piping (100): made of U-type tubular body for the thermal conductive fluid (111) passing through, wherein the U-type piping (100) is composed of a piping structure or used for being installed within the columnar thermal conductive body (300) composed of solid state or colloidal object; each of the U-type piping (100) has the first fluid inlet and outlet terminal (101) and the second fluid inlet and outlet terminal (102), the piping segments (1011) of the first fluid inlet and outlet terminal (101) are adjacently installed at the axial center of the columnar thermal conductive body (300) and sleeved with the thermal insulating device (400), and the piping segments (1022) of the second fluid inlet and outlet terminal (102) are radiate arranged along the axial direction and near the edge of the columnar thermal conductive body (300);
-- Thermal insulating device (400): related to thermal insulating structure constituted by the followings with thermal insulating effects, such as solid, flexible body, or foam, or enveloped colloid, gas, or liquid, or vacuum structure, for being provided to envelope the piping segments (1011) of the first fluid inlet and outlet terminal (101) of plural U-type piping (100), which are concentrated adjacent installed at the axial center of the columnar thermal conductive body (300), or the piping segments (1011) of the first fluid inlet and outlet terminal (101) are directly made of thermal insulating material or enveloped by thermal insulating material; by way of the above thermal insulating structure, the thermal energy loss caused by thermal conduction between the piping segments (1011) of the first fluid inlet and outlet terminal (101) and the piping segments (1022) of the second fluid inlet and outlet terminal (102) on the same side of the U-type piping (100) is substantially reduced;
-- Auxiliary thermal conductive structure (110): composed of thermal conductive material and installed at the exterior of the thermal insulating device (400);
The structure includes one or more than one of the following structural states:
1) Piping structure assembly: which is provided with two or more than two U-type piping in radiate arrangement, and the piping segments (1011) of the first fluid inlet and outlet terminals (101) of each U-type piping (100) are adjacently installed at the center of the piping structure assembly, and the thermal insulating device (400) is installed between the periphery of the piping segments (1011) of the first fluid inlet and outlet terminals (101) of each U-type piping, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the U-type piping (100), and piping segments (1011) of plural first fluid inlet and outlet terminals (101) concentrated adjacent installed at the center of the piping structure, and the thermal insulating device (400) installed the periphery thereof, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and is configured in the structural state having piping therein for being provided with the piping segments (1011) of the first fluid inlet and outlet terminals (101) of each U-type piping concentrated adjacent installed at the center of the piping structure, and the bottom of the piping segments (1011) of the first fluid inlet and outlet terminals (101) are radiate connected to the piping segments (1022) of the second fluid inlet and outlet terminals (102) arranged nearby the periphery of the piping structure, and the thermal insulating device (400) is installed between the piping segments (1011) of the first fluid inlet and outlet terminals (101) of each U-type piping adjacently installed at the center of the piping structure and the thermal conductive body structure, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

4. A pipe member equipped with heat insulation core pipeline, auxiliary heat conduction structure and U-shaped annularly-distributed pipeline as claimed in claim 1, wherein it further can have multiple sets of U-type piping jointly connected to the common piping (200) constituted by larger diameter piping installed at the axial center of the columnar thermal conductive body (300), the common piping (200) has a shared first fluid inlet and outlet terminal (1101), and is installed with the second fluid inlet and outlet terminal (102) in radiate arrangement along the axial direction of the columnar thermal conductive body (300), and the exterior of the thermal insulating device (400) is installed with the auxiliary thermal conductive structure (110); it is mainly constituted by two or more than two U-type piping (100), the bottom side thereof are connected to the common piping (200) for the thermal conductive fluid (111) passing through, wherein each of the U-type piping (100) is composed of a piping structure or used for being installed in the columnar thermal conductive body (300) composed of solid state or colloidal object; the bottom side of each of the U-type piping (100) is jointly connected to the bottom of the common piping (200) which is constituted by larger diameter piping and installed at the axial center of the columnar thermal conductive body (300), and the top of the common piping (200) has a shared first fluid inlet and outlet terminal (1101), and the piping segments (1022) connecting to the second fluid inlet and outlet terminals (102) of each route of the U-type piping (100) are radiate arranged along the axial direction of the columnar thermal conductive body (300); said common piping (200) is installed at the axial center of the columnar thermal conductive body (300), and is further installed with the thermal insulating device (400) between the common piping (200) and the piping segments (1022) connecting to the second fluid inlet and outlet terminals (102) of each route of the U-type piping (100), and the piping segments (1022) connecting to the second fluid inlet and outlet terminals (102) of each route of the U-type piping (100) are respectively arranged near the edge of the axial periphery of the columnar thermal conductive body (300); and
-- Thermal insulating device (400): related to thermal insulating structure constituted by the followings with thermal insulating effects, such as solid, flexible body, or foam, or enveloped colloid, gas, or liquid, or vacuum structure, for being installed between the piping segments (1022) connecting to the second fluid inlet and outlet terminals (102) of the U-type piping (100) and the common piping (200), or the common piping (200) is directly made of thermal insulating material or enveloped by thermal insulating material; by way of the above thermal insulating structure, thermal energy loss caused by thermal conduction between the piping segments of the common piping (200) and the second fluid inlet and outlet terminal (102) is reduced;
-- Auxiliary thermal conductive structure (110): composed of thermal conductive material and installed at the exterior of the thermal insulating device (400);
The structure includes one or more than one of the following structural states:
1) Piping structure assembly: which is provided with multiple sets of U-type piping (100) and the common piping (200) installed at the center of the piping structure assembly for connecting to the shared first fluid inlet and outlet terminal (1101), wherein the piping segments (1022) of the second fluid inlet and outlet terminals (102) are respectively arranged at the axial periphery of the piping structure assembly, and the bottom thereof is radiate distributed and connected to the bottom of the common piping (200), and the thermal insulating device (400) is installed between the piping segments (1022) of the second fluid inlet and outlet terminals (102) and the periphery of the common piping (200), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the common piping (200) having the shared first fluid inlet and outlet terminal (1101), and to envelope the piping segments (1022) connecting to the second fluid inlet and outlet terminals (102), and the bottom of the common piping (200) is communicated with the bottom of the piping segments (1022) of the second fluid inlet and outlet terminals (102), and the thermal insulating device (400) is installed at the periphery of the common piping (200), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the common piping (200) for connecting to the shared first fluid inlet and outlet terminal (1101), and installed with the thermal insulating device (400), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

5. A pipe member equipped with heat insulation core pipeline, auxiliary heat conduction structure and U-shaped annularly-distributed pipeline as claimed in claim 1, wherein the piping segments of the U-type wavy piping structure (600) arranged along the columnar periphery are further arranged in a waved shape near the edge of the axial periphery of the columnar thermal conductive body (300), and the exterior of the thermal insulating device (400) is installed with the auxiliary thermal conductive structure (110), and the main components are as followings:
-- U-type wavy piping structure (600): made of U-type wavy pipe body for the thermal conductive fluid (111) passing through, wherein the U-type wavy piping structure (600) is composed of a wave piping structure or used for being installed within the columnar thermal conductive body (300) composed of solid state or colloidal object; the U-type wavy piping structure (600) is placed in a waved shape around the periphery of the columnar thermal conductive body (300) and upper and lower wavy bended along the axial direction, and the both ends of the U-type wavy piping structure (600) have the piping segment (1011) of the first fluid inlet and outlet terminal (101) and the piping segment (1022) the second fluid inlet and outlet terminal (102) which are interlinked;
-- Thermal insulating device (400): related to thermal insulating structure constituted by the followings with thermal insulating effects, such as solid, flexible body, or foam, or enveloped colloid, gas, or liquid, or vacuum structure, for being provided to envelope the periphery of both or one of the piping segment (1011) for connecting to the first fluid inlet and outlet terminal (101) and the piping segments (1022) for connecting to the second fluid inlet and outlet terminal (102) of U-type wavy piping structure (600) is installed at the periphery of the columnar thermal conductive body (300), or both or one of the two piping segments are directly made of thermal insulating material or enveloped by thermal insulating material; by way of the above thermal insulating structure, the thermal energy loss caused by thermal conduction between the piping segment (1011) of the first fluid inlet and outlet terminal (101) and the piping segment (1022) of the second fluid inlet and outlet terminal (102) installed nearby on the U-type wavy piping structure (600) is substantially reduced;
-- Auxiliary thermal conductive structure (110): composed of thermal conductive material and installed at the exterior of the thermal insulating device (400);
The structure includes one or more than one of the following structural states:
1) Piping structure assembly: which is provided with the U-type wavy piping structure (600) arranged at the columnar periphery along the piping structure assembly, and the piping segment (1011) of the first fluid inlet and outlet terminal (101) and the piping segment (1022) of the second fluid inlet and outlet terminal (102) installed at two ends of the U-type wavy piping structure (600), and the thermal insulating device (400) installed on both or one of the two piping segments, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the U-type wavy piping structure (600) arranged around the columnar periphery, and to envelope the piping segment (1011) of the first fluid inlet and outlet terminal (101) and the piping segment (1022) of the second fluid inlet and outlet terminal (102) installed at two ends of the U-type wavy piping structure (600), as well as to envelope the thermal insulating device (400) installed on the two or at least one of the two piping segments, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the U-type wavy piping structure (600) arranged around the columnar thermal conductive body, including the piping segment (1011) of the first fluid inlet and outlet terminal (101) and the piping segment (1022) of the second fluid inlet and outlet terminal (102) installed at two ends of the U-type wavy piping structure (600), and the thermal insulating device (400) installed between the piping segment (1011) of the first fluid inlet and outlet terminal (101) and the piping segment (1022) of the second fluid inlet and outlet terminal (102) and the thermal conductive body structure, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

6. A pipe member equipped with heat insulation core pipeline, auxiliary heat conduction structure and U-shaped annularly-distributed pipeline as claimed in claim 1, wherein the U-type wavy piping structure having central piping segment (650), in which the piping segment (1011) of the first fluid inlet and outlet terminal (101) in the U-type wavy piping structure having central piping segment (650) is installed near the axial center of the columnar thermal conductive body (300), and the piping segment (1022) of the second fluid inlet and outlet terminal (102) is installed near the periphery of the columnar thermal conductive body (300), and the U-type wavy piping structure having central piping segment (650) between the two piping segments is arranged in a waved shape near the edge of the axial periphery of the columnar thermal conductive body (300) along the axial direction, and the exterior of the thermal insulating device (400) is installed with the auxiliary thermal conductive structure (110), and the main components are as followings:
-- U-type wavy piping structure having central piping segment (650): made of U-type wavy pipe body for the thermal conductive fluid (111) passing through, wherein the U-type wavy piping structure having central piping segment (650) is composed of a wavy piping structure having central piping segment or used for being installed within the columnar thermal conductive body (300) composed of solid state or colloidal object; the U-type wavy piping structure having central piping segment (650) is placed in a waved shape around the periphery of the columnar thermal conductive body (300) and upper and lower wavy bended along the axial direction, and the both ends of the U-type wavy piping structure having central piping segment (650) have the piping segment (1011) of the first fluid inlet and outlet terminal (101) and the piping segment (1022) of the second fluid inlet and outlet terminal (102) which are interlinked, in which the piping segment (1011) of the first fluid inlet and outlet terminal (101) is placed near the center of the columnar thermal conductive body (300), the piping segment (1022) of the second fluid inlet and outlet terminal (102) is placed near periphery of the columnar thermal conductive body (300), and the U-type wavy piping structure having central piping segment (650) between the two piping segments is arranged in a waved shape near the edge of the periphery of the columnar thermal conductive body (300) along the axial direction;
-- Thermal insulating device (400): related to thermal insulating structure constituted by the followings with thermal insulating effects, such as solid, flexible body, or foam, or enveloped colloid, gas, or liquid, or vacuum structure, for being provided to envelope both or one of the periphery of the piping segment (1011) for connecting to the first fluid inlet and outlet terminal (101) and the piping segments (1022) for connecting to the second fluid inlet and outlet terminal (102) of U-type wavy piping structure having central piping segment (650) installed at the center and periphery of the columnar thermal conductive body (300), or both or one of the two piping segments are directly made of thermal insulating material or enveloped by thermal insulating material; by way of the above thermal insulating structure, thermal energy loss caused by thermal conduction between the piping segments (1011) of the first fluid inlet and outlet terminal (101) and the piping segments (1022) of the second fluid inlet and outlet terminal (102) installed nearby on the U-type wavy piping structure having central piping segment (650) is substantially reduced;
-- Auxiliary thermal conductive structure (110): composed of thermal conductive material and installed at the exterior of the thermal insulating device (400);
The structure includes one or more than one of the following structural states:
1) Piping structure assembly: which is provided with the U-type wavy piping structure having central piping segment (650) installed near the center and the columnar periphery, and the piping segment (1011) of the first fluid inlet and outlet terminal (101) and the piping segment (1022) of the second fluid inlet and outlet terminal (102) of the U-type wavy piping structure having central piping segment (650), and the thermal insulating device (400) installed on the two or at least one of the two piping segments, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the U-type wavy piping structure having central piping segment (650), and to envelope the piping segment (1011) of the first fluid inlet and outlet terminal (101) and the piping segment (1022) of the second fluid inlet and outlet terminal (102) installed at two ends of the U-type wavy piping structure having central piping segment (650), as well as to envelope the thermal insulating device (400) installed on the two or at least one of the two piping segments, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the U-type wavy piping structure having central piping segment (650) arranged along the columnar thermal conductive body, including the piping segment (1011) of the first fluid inlet and outlet terminal (101) and the piping segment (1022) of the second fluid inlet and outlet terminal (102) installed at two ends of the U-type wavy piping structure having central piping segment (650), and the thermal insulating device (400) installed between the thermal conductive body and both or one of the piping segment (1011) of the first fluid inlet and outlet terminal (101) and the piping segment (1022) of the second fluid inlet and outlet terminal (102), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

7. A pipe member equipped with heat insulation core pipeline, auxiliary heat conduction structure and U-shaped annularly-distributed pipeline as claimed in claim 1, the spiral piping segment between the first fluid inlet and outlet terminal (101) and the second fluid inlet and outlet terminal (102) in the U-type spiral piping is spirally arranged near the edge of the axial periphery of the columnar thermal conductive body (300), and the exterior of the thermal insulating device (400) is installed with the auxiliary thermal conductive structure (110), and the main components are as followings:
-- U-type spiral piping structure (800): made of U-type spiral pipe body for the thermal conductive fluid (111) passing through, wherein the U-type spiral piping structure (800) is composed of a U-type spiral piping structure or used for being installed within the columnar thermal conductive body (300) composed of solid state or colloidal object; the U-type spiral piping of the U-type spiral piping structure (800) is spirally placed near the edge of the periphery of the columnar thermal conductive body (300), in which the first fluid inlet and outlet terminal (101) is placed at the top end of the central piping segment of the U-type spiral piping (700), and directly leads to the bottom of the U-type spiral piping of the U-type spiral piping structure (800) via the central piping segment of U-type spiral piping (700), and the second fluid inlet and outlet terminal (102) is placed at the top end of the piping segment (900) of the second fluid inlet and outlet terminal (102) of the U-type spiral piping structure (800) spirally up its own run;
-- Thermal insulating device (400): related to a thermal insulating structure constituted by the followings with thermal insulating effects, such as solid, flexible body, or foam, or enveloped colloid, gas, or liquid, or vacuum structure, wherein the U-type spiral piping structure (800) is placed in the columnar thermal conductive body (300), and the center of the columnar thermal conductive body (300) is installed with the central piping segment of U-type spiral piping (700) for leading up to the first fluid inlet and outlet terminal (101), and the central piping segment of U-type spiral piping (700) is directly made of the thermal insulating material or enveloped by the thermal insulating material, or the thermal insulating device (400) is installed between the U-type spiral piping structure (800) around and near the edge of the columnar thermal conductive body (300) spirally up its own run leading to the second fluid inlet and outlet terminal (102) and the piping segment (900) of the second fluid inlet and outlet terminal (102) of the U-type spiral piping structure (800) and the central piping segment of U-type spiral piping (700); by way of the above thermal insulating device (400), the thermal energy loss caused by thermal conduction between the central piping segment of U-type spiral piping (700) leading up to the first fluid inlet and outlet terminal (101), and the U-type spiral piping structure (800) leading to the second fluid inlet and outlet terminal (102) and the central piping segment of U-type spiral piping (700) is substantially reduced;
-- Auxiliary thermal conductive structure (110): composed of thermal conductive material and installed at the exterior of the thermal insulating device (400);
The structure includes one or more than one of the following structural states:
1) Piping structure assembly: which is provided with the U-type spiral piping structure (800), the piping segment (900) of the second fluid inlet and outlet terminal (102) of the U-type spiral piping structure (800), the central piping segment of U-type spiral piping (700) for connecting to the first fluid inlet and outlet terminal (101), and the thermal insulating device (400) installed at the periphery of the central piping segment of U-type spiral piping (700), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of thermal conductive material in various geometric cross section shapes such as round, oval, square, rectangular, or star-like shapes, for being served to envelope the U-type spiral piping structure (800), and to envelope the piping segment (900) of the second fluid inlet and outlet terminal (102) of the U-type spiral piping structure (800) and the central piping segment of U-type spiral piping (700) for connecting to the first fluid inlet and outlet terminal (101), as well as to envelope the thermal insulating device (400) installed at the periphery of the central piping segment of U-type spiral piping (700) at the first fluid inlet and outlet terminal (101), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the U-type spiral piping structure (800), the piping segment (900) of the second fluid inlet and outlet terminal (102) of the U-type spiral piping structure (800), the central piping segment of U-type spiral piping (700) for connecting to the first fluid inlet and outlet terminal (101), and the thermal insulating device (400) installed at the periphery of the central piping segment of U-type spiral piping (700) at the first fluid inlet and outlet terminal (101), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing columnar thermal conductive body (300) having piping therein as the structure member.

8. A pipe member equipped with heat insulation core pipeline, auxiliary heat conduction structure and U-shaped annularly-distributed pipeline as claimed in claim 1, the multiple-route U-type spiral piping structure (800) having two or more than two routes is further installed within the columnar thermal conductive body (300), and spirally installed at the periphery of the columnar thermal conductive body (300), and the bottom is concentrated toward the center and connected to the first fluid inlet and outlet terminal (101) through the central piping segment of U-type spiral piping (700), and the outer periphery of the central piping segment of U-type spiral piping (700) of the multiple routes concentrated at the center is installed with the thermal insulating device (400), and the exterior of the thermal insulating device (400) is installed with the auxiliary thermal conductive structure (110), and it mainly consists of:
-- Multiple-route U-type spiral piping: constituted by a U-type spiral piping structure (800) having two or more than two routes and allowing the thermal conductive fluid (111) to pass through, or by multiple sets of the U-type spiral piping structures (800) installed in the columnar thermal conductive body (300) composed of solid state or colloidal object; the U-type spiral piping structure (800) in multiple-route is spirally and annularly installed near the peripheral edge of the columnar thermal conductive body (300), wherein the first fluid inlet and outlet terminal (101) of the U-type spiral piping structure (800) of each route is installed at the top of the spiral piping structure center, and is communicated with the bottom of the U-type spiral piping structure (800) of each route through the central piping segment of U-type spiral piping (700) of each route, and the second inlet and outlet terminal (102) of each route is installed at the top end of the U-type spiral piping structure (800) spirally up its own run via the piping segment (900) of the second fluid inlet and outlet terminal (102) of the U-type spiral piping structure (800) of each route;
-- Thermal insulating device (400): related to a thermal insulating structure constituted by the followings with thermal insulating effects, such as solid, flexible body, or foam, or enveloped colloid, gas, or liquid, or vacuum structure; the U-type spiral piping structure (800) having two or more than two routes is installed in the columnar thermal conductive body (300), and the central piping segments of U-type spiral piping (700) of the multiple routes are concentrated in the columnar thermal conductive body (300) for upwardly connecting to the first fluid inlet and outlet terminal (101); the central piping segment of U-type spiral piping (700) is directly made of the thermal insulating material or sleeved with the thermal insulating material, or the periphery of the concentrated central piping segments of U-type spiral piping (700) of the multiple routes is installed with the thermal insulating structure (400), by way of the mentioned thermal insulating structure (400), the thermal energy loss caused by thermal conduction between the concentrated central piping segments of U-type spiral piping (700) of the multiple routes, and the U-type spiral piping structure (800) of each route, and the piping segment (900) of the second fluid inlet and outlet terminal (102) of the U-type spiral piping structure (800) of each route is substantially reduced;
-- Auxiliary thermal conductive structure (110): composed of thermal conductive material and installed at the exterior of the thermal insulating device (400);
The structure includes one or more than one of the following structural states:
1) Piping structure assembly: which is provided with the multiple-route U-type spiral piping composed of the U-type spiral piping structure (800) having two or more than two routes and the piping segment (900) of the second fluid inlet and outlet terminal (102) of the U-type spiral piping structure (800), and the central piping segment of U-type spiral piping (700) of each route is concentrated adjacent installed at the axial center, and the thermal insulating device (400) is installed at the periphery of the central piping segment of U-type spiral piping (700), or the central piping segment of U-type spiral piping (700) of each route is directly made of thermal insulating material, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of the thermal conductive material in various geometric cross section shapes such as round, oval, square, rectangular, or star-like shapes, for being served to envelope the U-type spiral piping structure (800) having two more or than two routes and the piping segment (900) of the second fluid inlet and outlet terminal (102) of the U-type spiral piping structure (800), and to envelope the thermal insulating device (400) installed at the periphery of the central piping segments of U-type spiral piping (700) concentrated adjacent installed at the axial center, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300); or the periphery of individual central piping segment of U-type spiral piping (700) of the multiple routes concentrated adjacent installed at the axial center is respectively installed with the thermal insulating device (400), or the individual central piping segment of U-type spiral piping (700) is directly made of the thermal insulating material, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the multiple-route spiral piping composed of the U-type spiral piping structure (800) having two or more than two routes, including the piping segment (900) of the second fluid inlet and outlet terminal (102) of the U-type spiral piping structure (800), the central piping segments of U-type spiral piping (700) of each route which connects to the first fluid inlet and outlet terminal (101) being concentrated adjacent installed at the axial center, and the thermal insulating device (400) installed at the periphery of the central piping segment of U-type spiral piping (700), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.

9. A pipe member equipped with heat insulation core pipeline, auxiliary heat conduction structure and U-shaped annularly-distributed pipeline as claimed in claim 1, wherein the U-type spiral piping structure (800) having two or more than two routes is further installed in the columnar thermal conductive body (300) for being installed nearby the peripheral edge of the columnar thermal conductive body (300), the center of the columnar thermal conductive body (300) is installed with the common piping (200) with a larger diameter, the bottom of the multiple-route U-type spiral piping structure (800) is communicated with the bottom of the common piping (200), and the thermal insulating structure is installed at the outer periphery of the common piping (200), and the exterior of the thermal insulating device (400) is installed with the auxiliary thermal conductive structure (110), and it mainly consists of:
-- Multiple-route U-type spiral piping: constituted by the U-type spiral piping structure (800) having two or more than two routes and allowing the thermal conductive fluid (111) to pass through, or by multiple sets of the U-type spiral piping structures (800) installed in the columnar thermal conductive body (300) composed of solid state or colloidal object; the U-type spiral piping structure (800) in multiple-route is spirally and annularly installed at the periphery of the columnar thermal conductive body (300), and each route has the piping segment (900) of the second fluid inlet and outlet terminal (102) of the U-type spiral piping structure (800) for connecting to the corresponding second fluid inlet and outlet terminal (102), and the bottom of the U-type spiral piping structure (800) of each route is communicated to the common piping (200), and the common piping (200) is installed at the center of the U-type spiral piping structure (800), and the top thereof is connected to the shared first fluid inlet and outlet terminal (1101);
-- Thermal insulating device (400): related to a thermal insulating structure constituted by the followings with thermal insulating effects, such as solid, flexible body, or foam, or enveloped colloid, gas, or liquid, or vacuum structure; the U-type spiral piping structure (800) of each route is installed in the columnar thermal conductive body (300), and the common piping (200) is installed at the axial center of the columnar thermal conductive body (300), and the top thereof is connected to the shared first fluid inlet and outlet terminal (1101), and the piping segment of the common piping (200) of the U-type spiral piping is directly made of the thermal insulating material or sleeved with the thermal insulating material, or the thermal insulating structure (400) is installed between the U-type spiral piping structure (800) of each route and the piping segment (900) of the second fluid inlet and outlet terminal (102) of the U-type spiral piping structure (800) of each route, and the piping segment of the common piping (200) of the U-type spiral piping, by way of the mentioned thermal insulating structure (400), the thermal energy loss caused by thermal conduction between the common piping (200), and the U-type spiral piping structure (800) and the piping segment (900) of the second fluid inlet and outlet terminal (102) of the U-type spiral piping structure (800) of each route is substantially reduced;
-- Auxiliary thermal conductive structure (110): composed of thermal conductive material and installed at the exterior of the thermal insulating device (400);
The structure includes one or more than one of the following structural states:
1) Piping structure assembly: which is provided with the multiple-route U-type spiral piping composed of the U-type spiral piping structure (800) having two or more than two routes and the piping segment (900) of the second fluid inlet and outlet terminal (102) of the U-type spiral piping structure (800), and the common piping (200) allowing the bottom of the U-type spiral piping structure (800) of each route to be communicated to, and the shared first fluid inlet and outlet terminal (1101) enabling the common piping (200) to upwardly connected to, and the thermal insulation device (400) installed on the common piping (200), or the common piping (200) directly made of thermal insulating material, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the piping structure assembly;
2) Columnar structure enveloped by the columnar thermal conductive body (300): which is provided with the columnar thermal conductive body (300) made of the thermal conductive material in various geometric cross section shapes such as round, oval, square, rectangular, or star-like shapes, for being served to envelope the multiple-route U-type spiral piping composed of the U-type spiral piping structure (800) having two more or than two routes and the piping segment (900) of the second fluid inlet and outlet terminal (102) of the U-type spiral piping structure (800), and to envelope the common piping (200) having its bottom communicated with the bottom of the U-type spiral piping structure (800) of each route and having its top communicated with the shared first fluid inlet and outlet terminal (1101), and to envelope the thermal insulating device (400) installed on the common piping (200), and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure enveloped by the columnar thermal conductive body (300);
3) Columnar structure utilizing the columnar thermal conductive body (300) having piping therein as the structure member: which is directly made of the columnar thermal conductive body (300), and configured in the structural state having piping therein for being installed with the multiple-route spiral piping structure (800) composed of the U-type spiral piping structure (800) having two or more than two routes and the piping segment (900) of the second fluid inlet and outlet terminal (102) of the U-type spiral piping structure (800), and the common piping (200) installed at the center of the U-type spiral piping structure (800) and communicated with the bottom of the U-type spiral piping structure (800) of each route, and the thermal insulating device (400) installed thereon, and the exterior of the thermal insulating device (400) is further installed with an auxiliary thermal conductive structure (110) made of thermal conductive material, thereby preventing the thermal insulating device (400) from generating thermal resistance in the columnar thermal conductive body (300), so as to configure the columnar structure utilizing the columnar thermal conductive body (300) having piping therein as the structure member.
